# EUROPEAN PATENT APPLICATION

(11) **EP 2 792 967 A2**
(43) Date of publication of application: **22.10.2014**
(21) Application number: 14164778.4
(22) Date of filing: 15.04.2014
(51) Int. Cl.: F24J 2/52, F24J 2/54

(54) **A modular panel-mounting system**

(30) Priority: 15.04.2013 GB 201306803
(71) Applicant: DC Energy Ltd, Witton, Norfolk NR13 5DS (GB)
(72) Inventor: Catchpole, David, Witton, Norfolk NR13 5DS (GB)
(74) Representative: ip21 Ltd

(57) **Abstract**

Disclosed herein in an array (70) including a plurality of modular frames, each frame enabling a solar panel to be mounted thereto. Each frame is mounted on a frame-support framework including fixing means enabling a frame-support framework to be joined to a neighbouring frame-support framework.

A tilt mechanism, enables a frame to be tilted in a vertical plane, between a horizontal and a vertical position relative to the respective frame-support framework. In addition each frame is independently pivotable about an axis line substantially in the vertical plane and the plane of the frame. Pivoting is actuated by a pivoting mechanism comprising a pivotable yoke (1). The pivoting and tilting mechanisms of the frames in an array (70) are linked by pivot linkage means and tilt linkage means and driven by a common pivoting drive means and a common tilt drive means respectively. A control means (25) governs the tilt and pivot drive means.

## Description

### Field of the Invention

The present invention relates to a frame module onto which a panel can be mounted.

The frame module is particularly suited for enabling a solar panel to be mounted such that the panel can be tilted and rotated to follow the path of the sun across the sky. Frame modules can be connected together to enable a single central steering system to be utilised.

### Background to the Invention

In recent years, particularly as photovoltaic solar panels are reducing in price, and costs for energy derived from other sources such as fossil fuels are increasing, the use of such panels in domestic and commercial environments is becoming more common. It is no longer unusual to see panels mounted to a roof or mounted in an array across a field or side of a hill.

In order to maximise the amount of light falling on a panel, a panel needs to be moveable to allow solar cells in the panel to be orientated more directly towards the sun as the sun moves across the sky. One alternative is to mount a plurality of panels to a single frame, which allows multiple panels to be steered by one control unit and mechanism. However, such a solution results in a heavy frame which presents a large flat surface to the environment. Not only is such a frame difficult to manoeuvre, but also the surface size can result in a large force on the frame, particularly in high winds.

Other solutions, allowing the use of a single steering means, are known in the art. In one set of solutions, a panel or panels are mounted to a frame, the frame being linked to other frames. The movement of the linked frame is then co-ordinated. Often movement of each frame is arranged to be about two axes: the first axis allowing a frame to be tilted between a horizontal and a vertical orientation and the second allowing rotation about an axis orthogonal to the first.

The prior art mounting means often suffer from a common problem, namely that they cannot be mounted on uneven ground. Therefore installation can be problematic and expensive as the surface on which the panels are to sit needs to be levelled, and in many cases a concrete base laid down.

It is an object therefore of the current invention to address the above problems and provide a frame assembly to support a panel or panels which frame assembly enables the panels to be driven by a central control and steering unit and which is able to be installed on uneven terrain.

### Summary of the Invention

According to a first aspect of the invention there is provided a modular panel mounting system comprising a frame to which a panel, such as a solar panel can be mounted,
a support framework on which the frame is mounted;
the frame being mounted of a lower end to be tilted by a tilt mechanism, in a vertical plane, between a horizontal and a vertical position, the tilting being actuated by a tilt drive means;
said frame being further independently pivotable about an axis line in the vertical plane and in the plane of the frame;
pivoting being actuated by a pivotable yolk driven by a pivoting drive means;
the support framework including fixing means enabling support framework to be joined to a neighbouring support framework.

Preferably the angle between neighbouring support frameworks is adjustable to take account of uneven terrain.

In a second aspect of the invention, there is provided an array comprising a plurality of modular frames in accordance with the above first aspect, the array comprising a first linkage means, which is moved by the pivoting drive means and is operably connected to the pivotable yolk of each modular panel;
a second linkage means which is moved by the tilt drive means and is operably connected to the tilt mechanism of each modular panel;
a control means to govern operation of the tilt and drive means.

The array can be set on uneven terrain to enable solar panels mounted to the modular frame to track the sun as it moves across the sky.

Preferably one or both of the linkage means comprises a wire or rod, and especially preferably a wire to impart flexibility to the or each linkage means.

### Brief Description of the Drawings

The invention is now described with respect to the accompanying drawings, which show by way of example only, embodiments of frame modules. In the drawings;
Figure 1a is a perspective view of a frame and Figure 1b is a side view thereof;
Figure 2 illustrates lattice beams and control units of a frame;
Figure 3 is a detailed, cut-away view of a rotation bar;
Figure 4a, 4b are respectively a drive-unit plan view and a sectional view through A-A of figure 4a,
Figure 5 shows details of a spring return system; and
Figure 6a - 6c illustrate an assembly of frames.

### Detailed Description of the Invention

Solar photovoltaic panels are being utilised with increasing frequency to derive energy for both domestic and industrial usage. Often panels are simply mounted to a roof of a building. However, in many instances the panels are kept at ground level. Usually in that event, panels are mounted to a frame which retains the panels between a horizontal and a vertical orientation. In order to derive the maximum energy, the frame, with its panel can be moveable to maintain the flat face of the panel orientated towards the sun and so reduce scattering and reflection.

Means are well known which enable a frame to be rotated about two separate, usually orthogonal axes. In addition means are also known to enable the movement of linked frames to be operated by a single drive mechanism, so reducing costs and parts required.

The present invention is concerned with such frames and provides a frame and frame module which can be installed even where the ground is uneven. The invention contemplates a frame or frames to which a panel or panels can be attached, each frame being itself mounted on a supporting structure, to form a frame module wherein individual frame modules can be linked together to form an array. Furthermore a module is described, which can be included as part of an array which includes a drive unit to drive movement of frames on linked frame modules. Moreover a control unit to govern the drive unit is included.

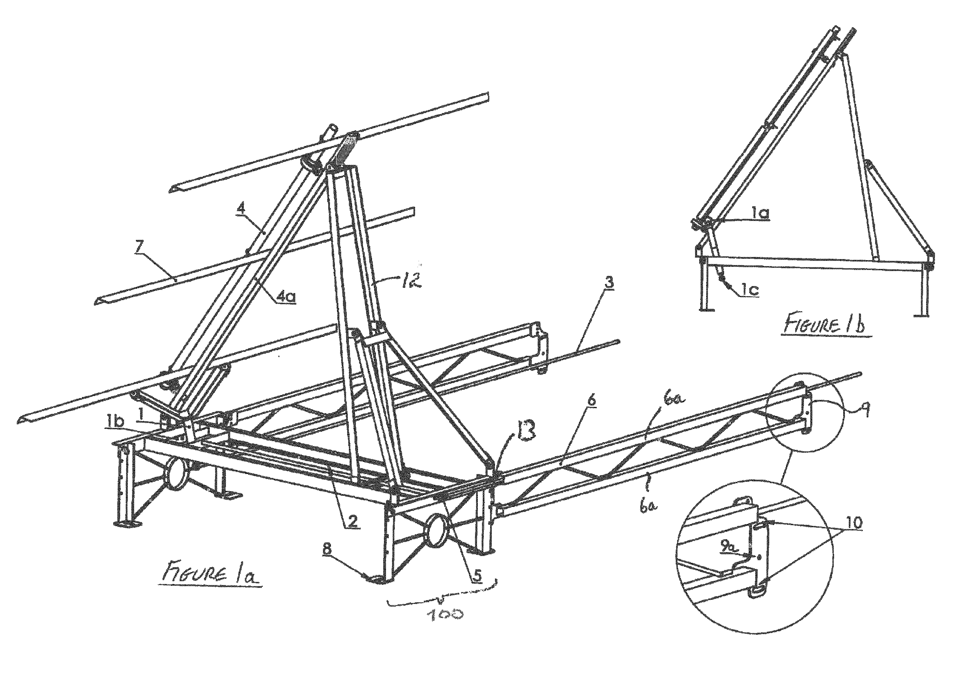

Referring initially to Figures 1a, 1b, these show a frame mounted to a support structure, forming a frame module. The support structure is itself connectable to a further support structure and also includes elements allowing movement of the frame to be effected.

The connecting structure which enables frame modules to be connected together, has as a basic unit a lattice beam 6. The beam 6 can be of various lengths depending on the terrain and exact use to which the beam 6 is to be put. The beam 6 is furnished at each end with a bracket 9. The bracket 9 enables the beam 6 to be connected to other units of the same or different type. By means of the brackets 9 therefore the units can be catenated together to produce the final overall framework.

In order that the linked frames can extend over uneven ground, the bracket 9 includes a pivot point 9a. The pivot point 9a is located such that it lies on the average horizontal centre line of a drive fixing point 1c (see Fig 1b). The pivot point 9a is provided on manufacture of the bracket 9.

As this minimises the distances between the drive fixing point of each module 1c, the problems caused by linked frame modules being at different heights is minimised.

Additionally angle adjustment slots 10 are provided so that a beam 6 can be installed at an angle to the horizontal whilst individual frame modules are maintained horizontal.

The crossbars 6a of the beam 6 are tubular, enabling wires/rods 3 which govern the rotation and tilt of the frame to pass therethrough, affording the wires/rods 3 protection from damage.

The frame module 100 supports the means of supporting a panel and the mechanisms for adjusting the orientation of said panel. In the illustrated embodiment, the module 100 has legs, each with a foot 8, the foot 8 having features such as an aperture 8a, to assist in securing the module 100 to the ground. Because of the feet 8, and the array functioning as a complete single unit, linked together through the lattice beams 6, there is no requirement for a concrete base to be laid down before the array can be set in position.

The overall structure, being secured across a greater area, is more secure and less affected by strong winds than prior art supports.

In order to support a panel or panels, solar panel mounting rails 7 are included. The mounting rails 7 are attached to an inclined rotary pivot 4, and are able to be adjusted to suit various solar panel sizes. The rotary pivot 4 allows the solar panels to be mounted around the pivot joint to keep an even balance.

The rotary pivot 4 is itself supported by a tilt support bar 4a, and assists in allowing a panel to be rotated irrespective of the angle at which the panel is tilted.

As indicted above, rotation of the panels in conjoined modules is carried out by means of a central drive unit to which each module is joined. A rotation wire/rod 3 is linked to the central drive unit and also, indirectly, to the mounting rails 7 on a module.

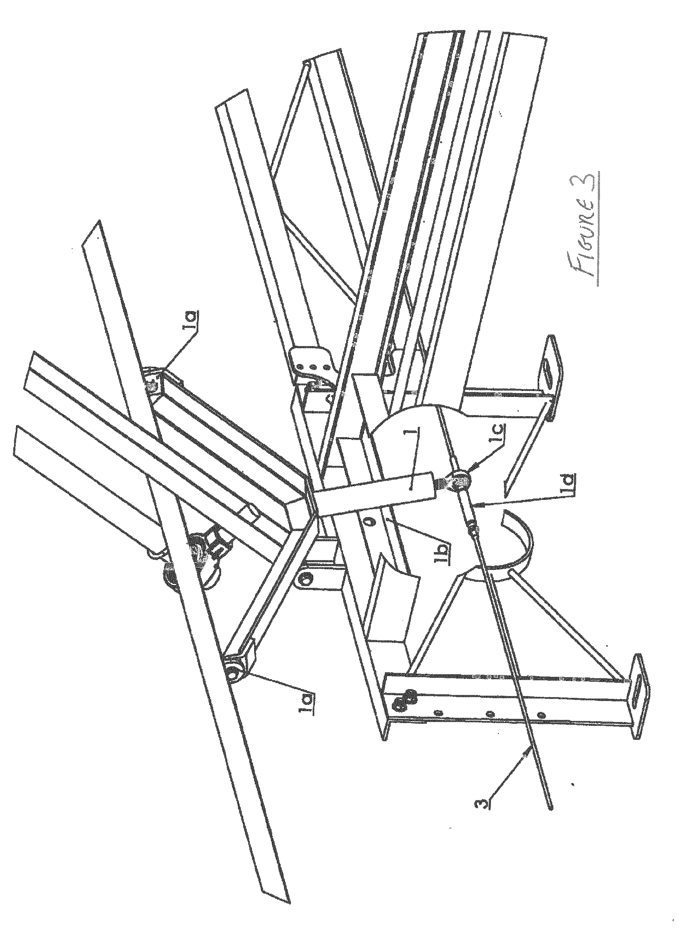

An embodiment of this arrangement can be seen in Figure 1, with more detail in Figure 3.

The wire/rod 3 links to a drive fixing point 1c. The drive fixing point 1c pivots, for example by means of an eyelet or a bearing to allow the wire/rod 3 to run parallel with the string of modules. In the illustrated embodiment, a tensioner 1d is included to ensure that the wire/rod 3 is able to exert the required force to rotate a frame.

The fixing point 1c is attached to and governs movement of a rotation yoke 1. The yoke 1 itself is attached via two yoke arms 1e to the mounting rail 7. Attachment of an arm 1e to the mounting rail 7 is via a yoke pivot point 1a. Such a connection, in proximity to the centre line of the rotary pivot 4, enables easier guidance of the rotation yoke 1. To provide the guidance, the rotation yoke 1 is housed between guide-bars 1b which act to restrain horizontal movement of the rotation yoke 1.

Restriction of the horizontal movement firstly allows the tilt support bar 4a to be raised and lowered without affecting the vertical position of the fixing point 1c to such a degree that performance of the wire or rod 3 is reduced.

Secondly, the drive mechanism, to be described below and which can be located in the middle, at the end or a position between in respect of a chain of modules does not need to accommodate a large amount of horizontal movement, irrespective of the tilt angle of a module.

In an alternative embodiment, not illustrated, a single bar can be used instead of a rotation yoke 1. Tilting of a frame, incorporated into a frame module is provided by a tilt mechanism which enables the frame to pivot about the pivot point 11 in a vertical plane. The tilt support bar 4a is pivotally attached at a first end to the pivot point 11. A sliding support frame 12 is slidably mounted at an upper end to the upper region of the tilt support bar 4a. The lower end of the support frame 12 is mounted for horizontal movement along the frame module 100. For added strength a further frame 13 is pivotally mounted to both the support frame 12 and the frame module 100.

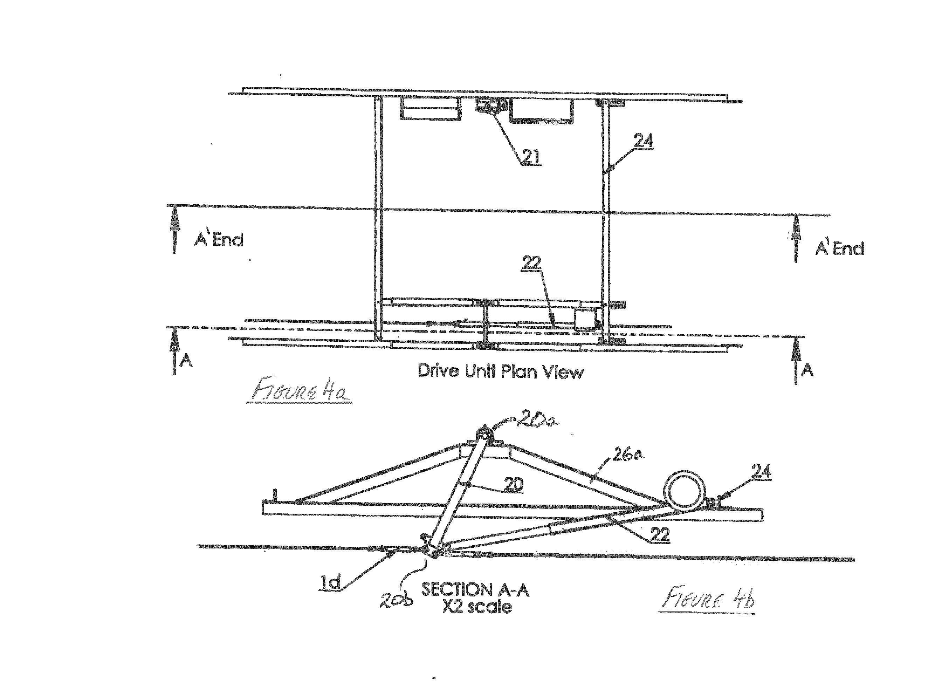

Similarly to the rotation mechanism for a frame, the tilt of each of the frames is governed by a central drive unit (21 in Figure 4a). The drive unit 21 acts by means of a wire/rod 3 to activate the tilt angle drive end 5. The drive end 5 acts through a lead-screw movement to cause the lower end of the support frame 12 to move horizontally, which translates into raising or lowering the upper end of the tilt support bar 4a, thus tilting the mounting rail 7.

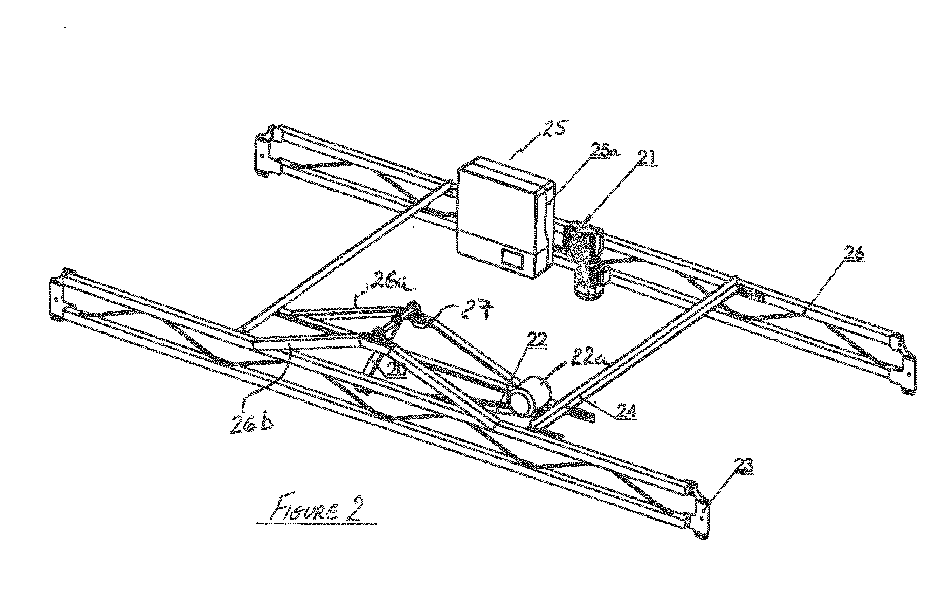

The rotary drive mechanism is now described in more detail, with particular reference to Figures 2 and 4.

As can be seen from these figures, the rotary drive mechanism, mounted on to a drive support bar 24, comprises a motor 22a which acts to operate a linear drive unit 22. The linear drive unit 22, which can be a hydraulic piston, is connected at its distal end to a rotation pivot bar 20. The pivot bar 20 is itself pivotally mounted at a first end to an axle 27 which is housed on a support frame 26a, 26b. The second end of the pivot bar 20 is pivotally mounted to the linear drive unit 22 as indicated above.

Extending from the second end of the pivot bar 20 are two rotation wire/rod tensioners 1d which ensure that, particularly in the case of a wire 3 being used rather than a rod, the wire 3 remains under tension and does not become slack. This feature can be useful for example in dealing with changes in length due to temperature changes. The pivot bar 20 is of dimensions and mounting to have the same swing length as the yoke 1. In use therefore the linear drive unit 22 acts to swing the pivot bar 20 between its two end positions, or to hold the pivot bar 20 at an orientation there between. Because of the connection wire/rod 3 between the pivot bar 20 and a swing yoke 1, movement of the pivot bar 20 results in pivotal movement of the yoke 1 by the same amount. Therefore, rotational movement of all the panels of an array can be achieved through the operation of a single drive unit 22.

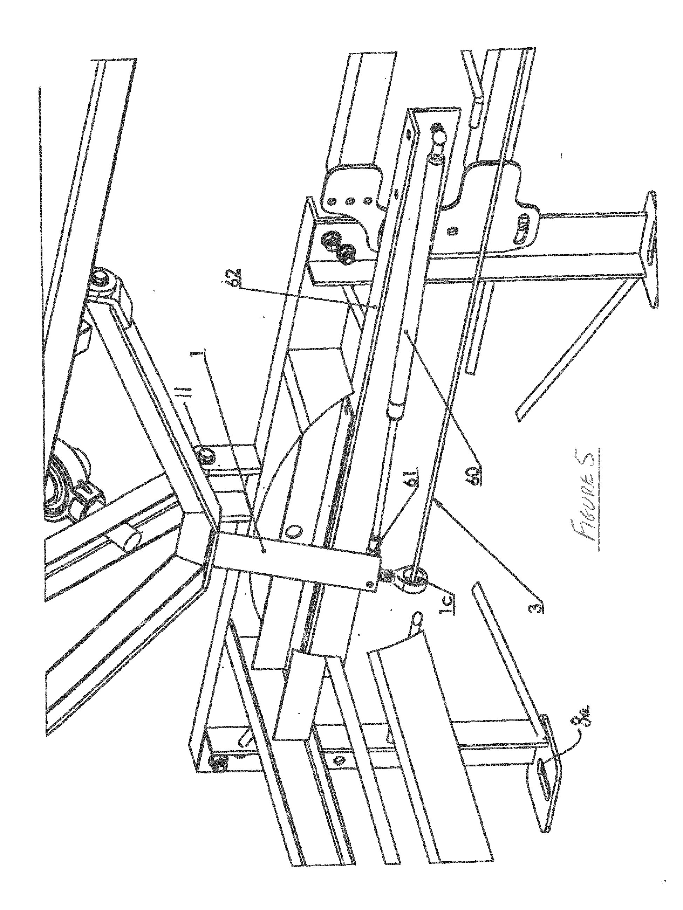

As a further means to ensure that the yoke 1 returns to its required position and to maintain the wire/rod 3 under tension, a spring return system as shown in Figure 5 is included.

The embodiment shown in Figure 5 uses a gas spring unit 60 to return the yoke 1. However, a conventional extension spring can be used on the opposite side of the yoke 1 which pulls the yoke 1 to its rest position, rather than pushes the yoke 1. The gas spring unit 60 is supported on a support 62, and connects to the yoke 1 by means of a rod end ball fitting 61.

Both the rotation and the tilt mechanism are governed by a single control device 25 (Figure 2). The control device 25 includes a housing 25a mounted on to the drive system lattice beam 26. Linkage of the control device 25 to the drive units 21 and 22 can be via physical means, such as a wire or through a wireless linkage. Power to drive the units 21 and 22 can be derived directly from the solar panels, but can include a battery as back-up if required.

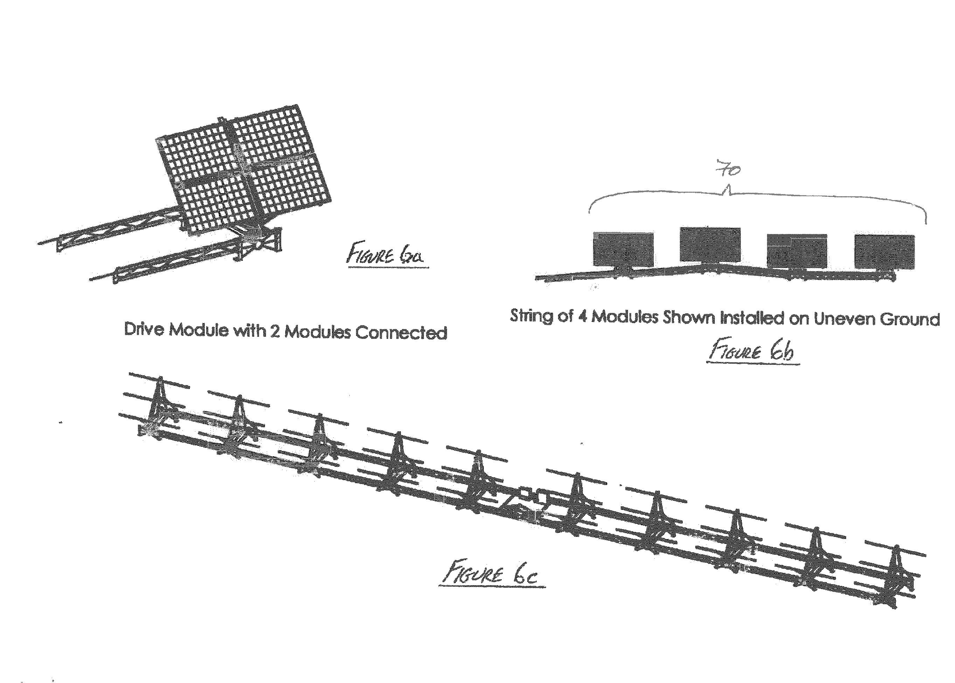

In Figures 6a - c various configurations of linked to form an array 70 of frame modules are shown. Figure 6c shows a control drive module housing the control device 25 and the drive units 21, 22 linked on either side to 5 frame modules.

## Claims

1. An array (70) comprising;
a plurality of modular frames,
each frame being suitable to enable a panel, such as a solar panel to be mounted thereto,
each frame being mounted on a frame support framework;
a support framework including fixing means enabling a frame-support framework to be joined to a neighbouring frame-support framework;
a tilt mechanism (4a, 12), enabling a frame to be tilted in a vertical plane, between a horizontal and a vertical position relative to the respective frame-support framework; a frame being further pivotable about an axis line substantially in the vertical plane and in the plane of the frame;
pivoting being actuated by a pivoting mechanism comprising a pivotable yoke (1); the pivoting and tilting mechanisms of the frames in an array (70) being linked by pivot linkage means and tilt linkage means and driven by a common pivoting drive means and a common tilt drive means respectively;
a control means to govern operation of the tilt and pivot drive means.

2. An array according to Claim 1, wherein neighbouring frame-support frameworks are linked together by a bracket (9), said bracket (9) including a pivot point (9a) enabling neighbouring frame-support frameworks to pivot relative to each other about a horizontal axis.

3. An array according to Claim 2, wherein each bracket includes one or more angle adjustment slots (10).

4. An array according to any preceding claim, wherein a frame-support framework includes cross-bars (6a) in the form of tubular members.

5. An array according to any preceding claim, wherein the linkage means comprises a wire or rod (3).

6. An array according to Claim 5, wherein the tilt linkage means comprises a wire (3).

7. An array according to Claim 6, wherein a tensioner (1d) is connected to the wire to ensure the wire remains taut.

8. An array according to Claims 5 - 7, wherein the pivot linkage means comprises a wire.

9. An array according to Claim 8, wherein a tensioner is connected to the wire to ensure the wire remains taut

10. An array according to Claims 5 - 9, wherein the wire or rod is housed within a tubular member (6a).

11. An array according to any preceding claim, wherein the drive means is connected to the pivot linkage means by a pivot bar (20), said pivot bar (20) having the same length as the pivotable yoke.

12. An array according to any preceding claim, wherein the tilt mechanism includes a tilt bar, the tilt bar being mounted at a first upper end to an upper region of a frame and horizontally slidable mounted at a second lower end, motion of the lower end being driven by the tilt drive means and causing tilting of a frame.
